# EUROPÄISCHE PATENTSCHRIFT

(11) **EP 0 543 833 B1**
(45) Veröffentlichungstag und Bekanntmachung des Hinweises auf die Patenterteilung: **20.12.1995**
(21) Anmeldenummer: 91913003.9
(22) Anmeldetag: 26.07.1991
(51) Int. Cl.: H04N 1/40

(54) **VERFAHREN ZUM DRUCKEN EINES HALBTONBILDES**
PROCESS FOR PRINTING A HALF-TONE IMAGE
PROCEDE POUR L'IMPRESSION D'UNE IMAGE EN DEMI-TEINTE

(30) Priorität: 13.08.1990 DE 4025793
(43) Veröffentlichungstag der Anmeldung: 02.06.1993
(73) Patentinhaber: EASTMAN KODAK COMPANY, Rochester, New York 14650 (US)
(72) Erfinder: DRESS, Friedrich, Wilhelm, D-1000 Berlin 45 (DE); NISIUS, Raimund, D-1000 Berlin 12 (DE); GRETHEN, Hartmut, D-1000 Berlin 27 (DE); PEKRUHN, Wolfgang, D-1000 Berlin 33 (DE)
(74) Vertreter: Pohle, Reinhard, Dipl.-Phys.
(86) Internationale Anmeldenummer: DE9100612
(87) Internationale Veröffentlichungsnummer: WO9203885

(56) Entgegenhaltungen:
- EP-A- 0 240 202
- EP-A- 0 292 292
- EP-A- 0 304 289
- WO-A-90/04898
- DE-A- 2 221 901
- FR-A- 2 455 409
- FR-A- 2 497 043

## Beschreibung

Die Erfindung betrifft ein Verfahren zum Drucken eines Halbtonbildes gemäß Bilddaten, wobei jedes Bilddatum die Halbtonstufe eines Rasterpunktes eines Vorlagenbildes beschreibt, bei dem Verarbeitungsrahmen verwendet werden, wobei jeder Verarbeitungsrahmen Positionen für die Bilddaten von jeweils mehreren benachbarten Rasterpunkten aufweist, bei dem die Bilddaten in die Verarbeitungsrahmen in der Anordnung der von ihnen beschriebenen Rasterpunkte übernommen werden, bei dem aus den in den Verarbeitungsrahmen enthaltenen Bilddaten Farbstufenwerte gewonnen werden, die Druckpositionen eines Druckrasters zugeordnet werden, und bei dem zum Erzeugen der Halbtonstufen wahlweise Farbpunkte mit abgestuften Farbstufungen an den Druckpositionen gedruckt werden, wobei die Farbstufung jedes Farbpunktes gemäß dem der jeweiligen Druckposition zugeordneten Farbstufenwert eingestellt wird.

Im Rahmen der vorliegenden Erfindung ist unter Drucken grundsätzlich das Aufbringen von Farbpunkten auf einen Aufzeichnungsträger zu verstehen.

Aus der DE-C-35 25 011 ist ein Verfahren zum Drucken eines Halbtonbildes mit mehreren Halbtonstufen bekannt, wobei jedes Bilddatum die Halbtonstufe eines Rasterpunktes eines Vorlagenbildes beschreibt. Mittels einer Schwellwertbetrachtung wird jedem Bilddatum eine Matrix zugeordnet, die eine Anzahl von Druckpositionen eines Druckrasters umfaßt. Die Druckpositionen jeder Matrix sind mit Farbpunkten abgestufter Farbstufungen (verschiedenen Größen) belegbar. Um bei diesem bekannten Verfahren eine ausreichend große Anzahl von Halbtonstufen erzeugen zu können, muß die Matrix eine entsprechend hohe Anzahl von Druckpositionen umfassen. Mit zunehmender Anzahl von Druckpositionen pro Matrix nimmt jedoch die Ortsauflösung des wiedergegebenen Halbtonbildes im Vergleich zum Vorlagenbild erheblich ab. Um dennoch eine gute Bildwiedergabe zu erreichen, müssen daher bei dem bekannten Verfahren Druckköpfe mit einer sehr hohen Auflösung verwendet werden, die den Preis einer entsprechenden Druckeinrichtung verteuern.

Aus der FR-A-2 455 409 ist ein Verfahren zur Reproduktion von Halbtonbildern bekannt, bei dem die Schärfe der Originalvorlage durch Umsetzen der Bilddichte einer jeden Bildelementarfläche in einen digitalen Wert mittels einer Vielzahl von Punktumsetzungsmatrizen erhalten bleibt, die Positionsnummern besitzen und wobei jeder Halbtonstufe jeweils ein Referenzmuster zugeordnet ist. Ein mit dem bekannten Verfahren erzeugtes Druckbild ist daher digialisiert, d. h. durch das Vorhandensein oder die Abwesenheit eines Standard-Farbbildpunktes an dem jeweiligen Druckrasterpunkt charakterisiert. Bei Kontrastsprüngen stellen sich aufgrund der nur digitalen Ausgabemöglichkeit Texturen ein, für die das menschliche Auge äußerst empfindlich ist.

Die DE-A1-2 221 901 beschreibt ein Kopierverfahren für den Halbtondruck, bei dem Verarbeitungsrahmen verwendet werden. Jeder Verarbeitungsrahmen hat Positionen für die Bilddaten von jeweils mehreren benachbarten Rasterpunkten. Aus den Bilddaten wird bei diesem bekannten Verfahren nur jeweils die digitale Information gewonnen, ob an einem vorgegebenen Druckpunkt ein Standard-Farbpunkt ausgegeben werden soll oder nicht.

Die Erfindung geht von einem aus der EP-0 240 202-A1 bekannten Verfahren zum Drucken eines Halbtonbildes aus, bei dem auch ein Vorlagenbild in Form von Bilddaten vorliegt, wobei jedes Bilddatum einem Rasterpunkt des Vorlagenbildes zugeordnet ist und dessen Halbtonstufe beschreibt. Bei diesem bekannten Verfahren werden Verarbeitungsrahmen verwendet, wobei jeder Verarbeitungsrahmen Positionen zur Aufnahme von jeweils mehreren Bilddaten von benachbarten Rasterpunkten des Vorlagenbildes aufweist; die Bilddaten werden in die Positionen der Verarbeitungsrahmen in der Anordnung der von ihnen beschriebenen Rasterpunkte übernommen. Aus den in den Verarbeitungsrahmen enthaltenen Bilddaten werden durch Mittelwertbildung Farbstufenwerte gewonnen und diese Druckpositionen eines direkt für den Ausdruck bestimmten Druckrasters zugeordnet. An jeder Druckposition des Druckrasters kann zur Erzeugung der Halbtonstufen wahlweise ein Farbpunkt mit abgestuften Farbstufungen ausgegeben werden; die Farbstufung jedes Farbpunktes ist durch einen der jeweiligen Druckposition zugeordneten Farbstufenwert bestimmt. Bei dem bekannten Verfahren werden die Bilddaten eines Verarbeitungsrahmens gemeinsam durch Mittelwertbildung oder Interpolation ausgewertet und auf diese Weise ein Farbstufenwert gewonnen, der einer der Anzahl von Bilddaten pro Verarbeitungsrahmen entsprechenden Anzahl von Druckpositionen im Druckraster zugeordnet wird. Auf diese Weise ist im Gegensatz zu dem aus der DE-C-35 25 011 bekannten Verfahren bei Verwendung eines Aufzeichnungskopfes, dessen Auflösung der Auflösung des Vorlagenbildes annähernd entspricht, eine hohe Zahl von Halbtonstufen erzeugbar, weil die Anzahl der Druckposition, denen jeweils der gewonnene Farbstufenwert zugeordnet wird, zumindest annähernd der Anzahl der in dem Verarbeitungsrahmen enthaltenen Bilddaten entspricht. Bei dem aus der EP-A-0 240 202 bekannten Verfahren ist eine jedoch erheblich verminderte Ortsauflösung im Bereich starker Kontrastsprünge des Vorlagebildes gegeben. Ein durch Bilddaten innerhalb eines Verarbeitungsrahmens repräsentierter Kontrastsprung ist nämlich aufgrund der Mittelwertbildung nicht scharf darstellbar. Für derartige Unschärfen (Vermischungseffekte) ist das menschliche Auge äußerst sensibel. Dieser Effekt wirkt sich mit zunehmender Anzahl von Bilddaten bzw. Positionen pro Verarbeitungsrahmen zunehmend störend aus.

Der Erfindung liegt die Aufgabe zugrunde, ein Verfahren zum Drucken eines Halbtonbildes zu schaffen, mit dem eine hohe Anzahl verschiedener Halbtonstufen erzeugbar ist und in jedem Bereich eine hohe Ortsauflösung gegeben ist.

Diese Aufgabe wird bei einem Verfahren der eingangs genannten Art erfindungsgemäß dadurch gelöst, daß
- den Positionen der Verarbeitungsrahmen Positionsnummern zugeordnet werden,
- daß jeder Halbtonstufe jeweils ein Referenzmuster zugeordnet ist, wobei das jeweilige Referenzmuster vorgegebene Farbstufenwerte in Positionen enthält, die hinsichtlich ihrer Anordnung den Positionen in den Verarbeitungsrahmen entsprechen,
- und daß aus jedem Bilddatum ein Farbstufenwert für eine Druckposition gewonnen wird, indem gemäß der von dem Bilddatum beschriebenen Halbtonstufe und der Positionsnummer seiner Position in dem Verarbeitungsrahmen das der betreffende Halbtonstufe zugeordnete Referenzmuster ausgewählt und der an entsprechender Positionsnummer im ausgewählten Referenzmuster vorhandene Farbstufenwert der dem jeweiligen Bilddatum entsprechenden Druckposition zugeordnet wird.

Das erfindungsgemäße Verfahren bietet den Vorteil, daß Referenzmuster mit einer verhältnismäßig großen Anzahl von Farbstufenwerte enthaltenden Positionen verwendet werden können, so daß eine hohe Anzahl fein abgestufter Halbtonstufen erzeugbar ist. Gleichzeitig ist mit dem erfindungsgemäßen Verfahren in vorteilhafter Weise im Bereich von Kontrastsprüngen des Vorlagenbildes eine Auflösung ermöglicht, die nur von der Feinheit des Druckrasters bestimmt und von der Anzahl der unterschiedlichen Farbstufenwerte abhängig ist. Eine unscharfe Darstellung im Bereich von Kontrastsprüngen ist damit in vorteilhafter Weise vermieden, ohne daß die Druckeinrichtung im Vergleich zur Rasterung des Vorlagenbildes einer erhöhten Auflösungsfähigkeit bedarf.

Eine Vergleichmäßigung des optischen Eindrucks der erzeugbaren Halbtonstufen wird gemäß einer vorteilhaften Fortbildung des erfindungsgemäßen Verfahrens dadurch erreicht, daß in jedem Referenzmuster höchstens zwei verschiedene Farbstufenwerte enthalten sind.

Eine weitere vorteilhafte Fortbildung des erfindungsgemäßen Verfahrens besteht darin, daß Referenzmuster verwendet werden, die sich von Halbtonstufe zu Halbtonstufe in der Belegung der Positionen darin unterscheiden, daß jeweils eine Position mit einem im Vergleich zum Referenzmuster der nächstniedrigen Halbtonstufe um eine Stufe erhöhten Farbstufenwert belegt ist, wobei die Reihenfolge der Belegung mit einem um jeweils Stufe erhöhten Farbstufenwert bei zunehmender Intensität der Halbtonstufen durch die Folge der Positionsnummern bestimmt wird. Damit ergibt sich in Bereichen des Wiedergabebildes, die Bereichen des Vorlagenbildes mit annähernd gleichen Halbtonstufen entsprechen, ein sehr gleichmäßiger Farbeindruck; Kontrastsprünge und regelmäßige Farbeindrücke (Texturen) für das menschliche Auge sind damit in vorteilhafter Weise vermieden.

Die Gleichmäßigkeit einer mit gleichen oder annähernd gleichen Halbtonstufen bedruckten Fläche wird gemäß einer weiteren vorteilhaften Fortbildung des erfindungsgemäßen Verfahrens dadurch weiter verbessert, daß die Positionsnummern in einem Verarbeitungsrahmen so festgelegt werden, daß beim Setzen einer Positionsnummer die Summe der Abstände zu den bereits gesetzten Positionsnummern maximal ist, wobei auch die gesetzten Positionen unmittelbar benachbarter Verarbeitungsrahmen betrachtet werden.

Da das menschliche Auge für Texturen bzw. Strukturen in horizontaler und/oder vertikaler Bildrichtung besonders empfindlich ist, ist gemäß einer vorteilhaften Weiterbildung des erfindungsgemäßen Verfahrens vorgesehen, daß Verarbeitungsrahmen und Referenzmuster mit symmetrisch rautenförmiger Struktur verwendet werden.

In Abwägung der Anzahl erzielbarer Halbtonstufen gegenüber dem verarbeitungstechnischen Aufwand haben sich Verarbeitungsrahmen und Referenzmuster mit jeweils dreizehn Positionen als besonders vorteilhaft erwiesen.

Die Erfindung wird im folgenden anhand einer Zeichnung näher erläutert. Es zeigen
Figur 1 eine schematische Darstellung des erfindungsgemäßen Verfahrens,
Figur 2 eine schematische Darstellung zur Ermittlung von Positionsnummern,
Figur 3 Positionsnummern in Verarbeitungsrahmen bzw. Referenzmustern,
Figur 4 einen bevorzugten Verarbeitungsrahmen bzw. ein bevorzugtes Referenzmuster,
Figur 5 Farbstufenwerten zugeordnete Farbpunkte,
Figur 6 verschiedenen Halbtonstufen zugeordnete Referenzmuster,
Figuren 7 und 8 Details der Figur 1 und
Figur 9 die Verhältnisse bei einem Kontrastsprung.

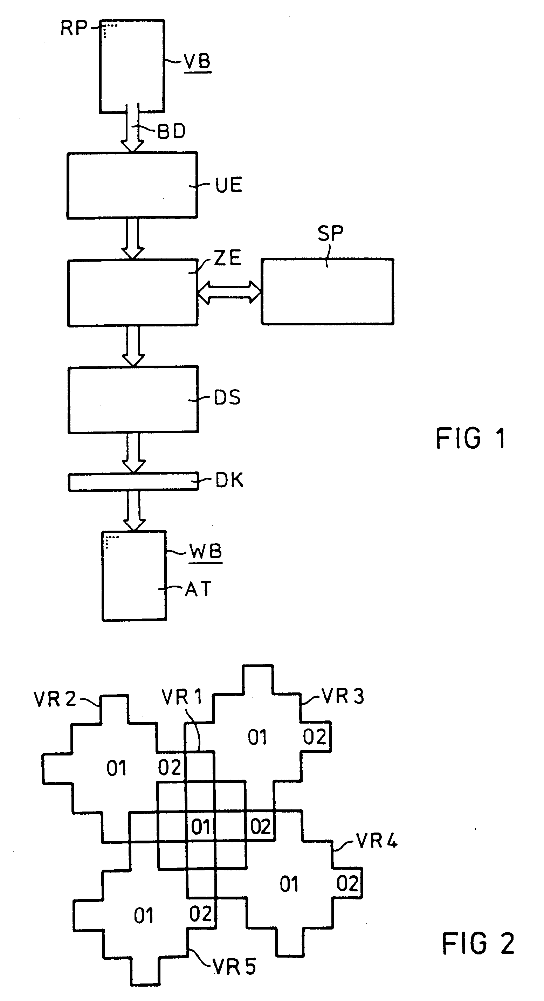

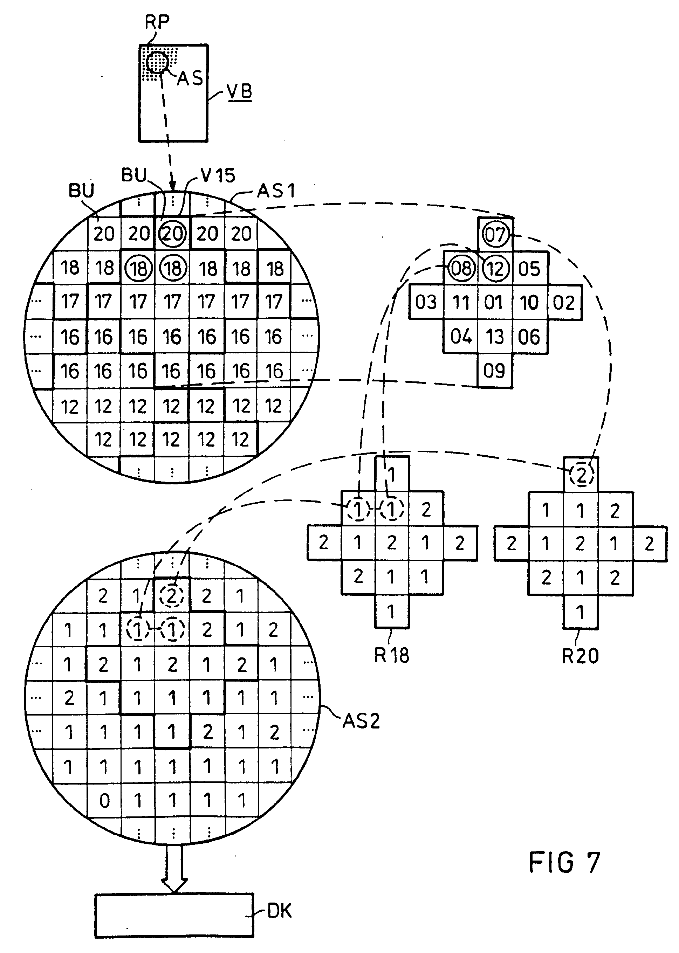

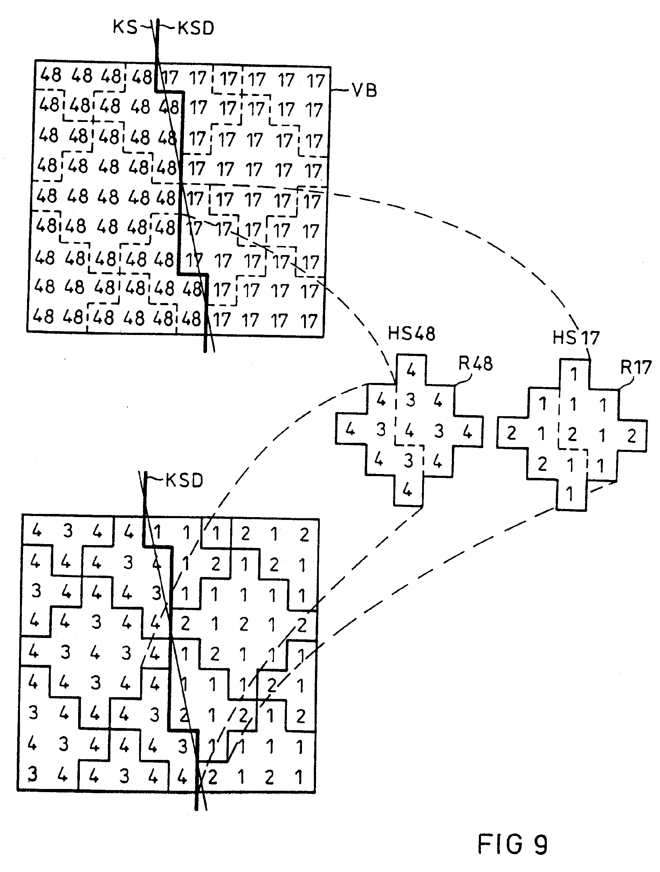

Gemäß Figur 1 liegt ein Vorlagenbild VB in Form von digitalen Bilddaten BD vor. Die Bilddaten BD können beispielsweise durch optisches Abtasten des Vorlagenbildes VB erzeugt worden sein. Jedes einzelne Bilddatum der Bilddaten BD repräsentiert einen an einer bestimmten Stelle des Vorlagenbildes VB liegenden Rasterpunkt RP mit seiner Halbtonstufe. Unter einer Halbtonstufe ist eine farbliche Abstufung der Farbe des Vorlagenbildes (beim Schwarz-Weiß-Bild beispielsweise verschiedene Graustufen) an diesem Rasterpunkt zu verstehen. In einer Umsetzeinrichtung UE werden jeweils Bilddaten BD von jeweils mehreren benachbarten Rasterpunkten RP Verarbeitungsrahmen in der Anordnung zugeordnet, in der die von ihnen repräsentierten Rasterpunkte RP auf dem Vorlagenbild VB angeordnet sind. Wie im Zusammenhang mit den Figuren 7 und 8 später näher erläutert, wird in einer Zuordnungseinrichtung ZE aus jedem Bilddatum ein Farbstufenwert gewonnen, indem auf in einem Speicher SP abgelegte Referenzmuster zugegriffen wird. Der jeweils auf diese Weise bestimmte Farbstufenwert wird in einen Druckdatenspeicher DS in eine Speicherstelle eingeschrieben, die dem durch das jeweilige Bilddatum repräsentierten Rasterpunkt zugeordnet ist. Zum Drucken eines Wiedergabebildes WB werden die in dem Druckdatenspeicher DS enthaltenen Daten einem Druckkopf DK zugeführt, der mehrere einzeln ansteuerbare Druckelemente enthält. Dabei kann es sich beispielsweise um einen Thermodruckkopf handeln, bei dem die Ansteuerungsenergie der einzelnen Druckelemente jeweils einen Farbpunkt unterschiedlicher Größe und damit unterschiedlicher Farbstufung auf einem Aufzeichnungsträger AT bewirkt.

Figur 2 zeigt schematisch das Vorgehen zur Bestimmung von Positionsnummern in einem Verarbeitungsrahmen VR1, wobei auch dem Verarbeitungsrahmen VR1 unmittelbar benachbarte weitere Verarbeitungsrahmen VR2 bis VR5 betrachtet werden. Zur Ermittlung einer besonders günstigen Positionsnummernfolge werden die Positionen der Verarbeitungsrahmen VR1 bis VR5 in jeder kombinatorisch denkbaren Reihenfolge mit Positionsnummern versehen. In der Figur 2 sind beispielsweise die Positionsnummern 01 und 02 bereits eingetragen, wobei folgende Positionsnummern 03 bis 13 beliebig gesetzt werden bis die Verarbeitungsrahmen mit Positionsnummern vollständig besetzt sind. Die erste Positionsnummer 01 wird jeweils willkürlich gesetzt und anschließend die folgenden Positionsnummern entsprechend gesetzt. Dabei werden jeweils die Abstände zu den bereits gesetzten Positionsnummern bestimmt und addiert. Es wird diejenige Reihenfolge von Positionsnummern als am günstigsten angesehen, deren Summe der auf diese Weise ermittelten Abstände maximal ist.

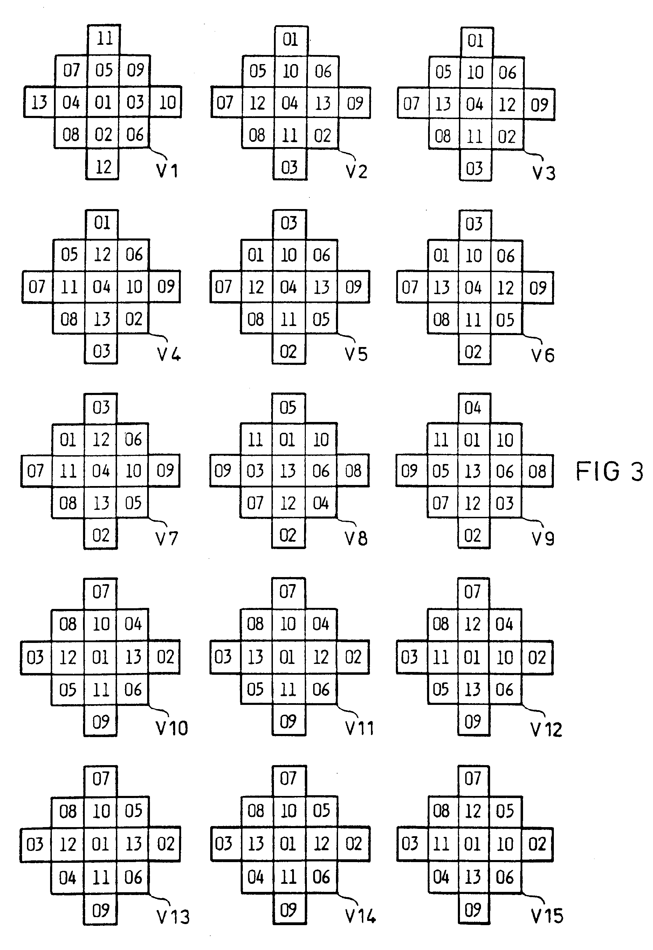

Figur 3 zeigt fünfzehn auf die zuvor beschriebene Art ermittelte Positionsnummernfolgen, die hinsichtlich der oben erläuterten Abstände gleichwertig sind. Drucktests haben ergeben, daß der Verarbeitungsrahmen V15 mit seiner Folge von Positionsnummern für das erfindunsgemäße Verfahren am günstigsten ist, weil bei einer zunehmenden Verteilung von gleichen Farbpunkten gemäß der aufzählenden Positionsnummern für das menschliche Auge bei Halbtonflächen ein besonders gleichmäßiger Eindruck entsteht.

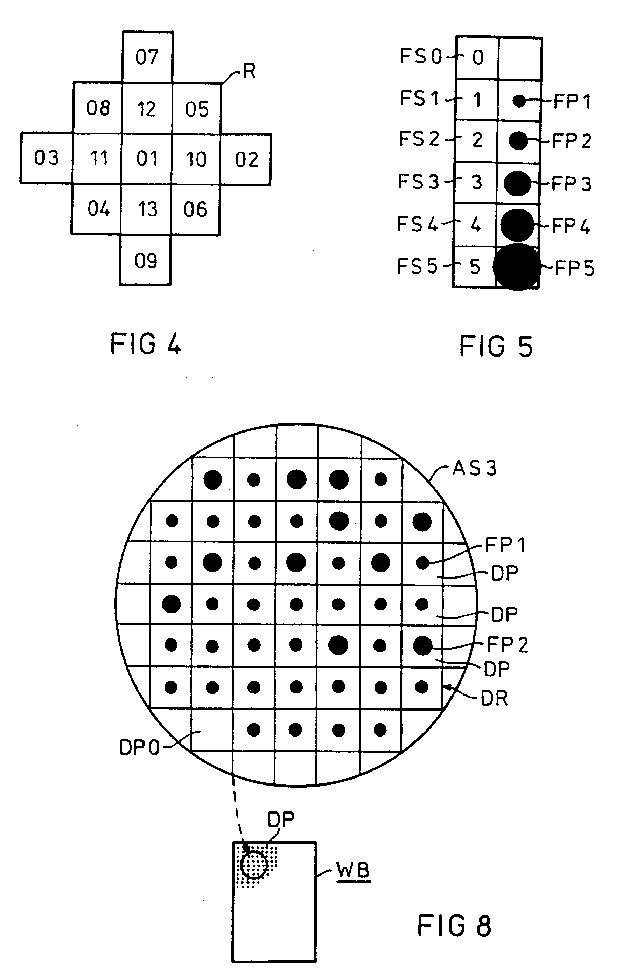

In Figur 4 ist ein Referenzmuster R gezeigt, das in seiner Struktur und der Anordnung von Farbstufenwerten enthaltenden Positionen (Positionsnummern 01 bis 13) dem Verarbeitungsrahmen V15 gemäß Figur 3 entspricht. Sowohl der Verarbeitungsrahmen V15 als auch das Referenzmuster R weisen eine rautenförmige, symmetrische Struktur auf und haben insgesamt dreizehn Positionen.

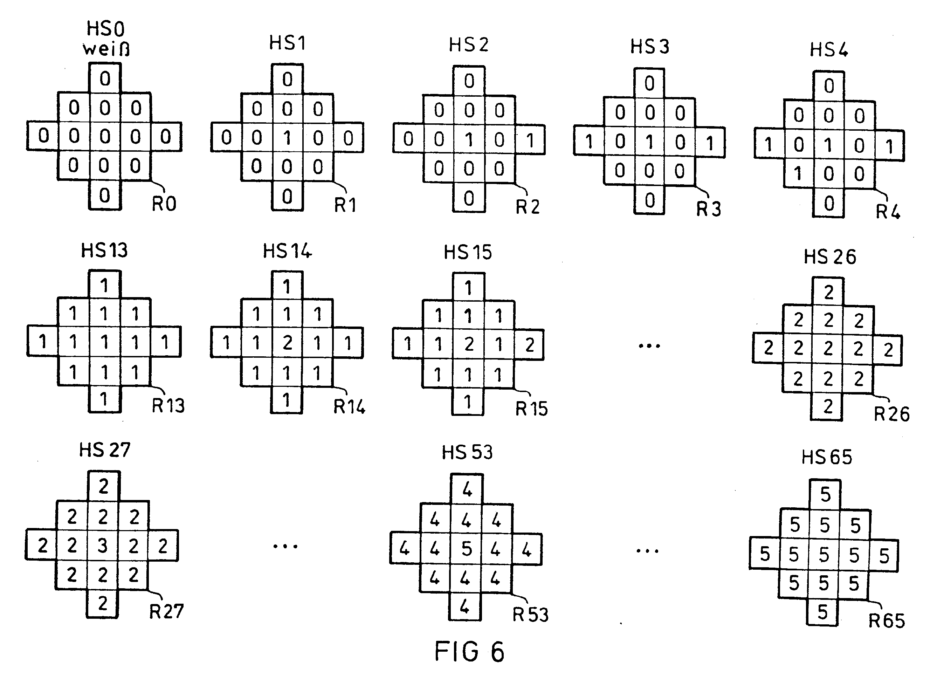

Im folgenden wird anhand der Figuren 5 und 6 die Belegung von verschiedenen Halbtonstufen zugeordneten Referenzmustern mit Farbstufenwerten FS0 bis FS5 beschrieben. Gemäß Figur 5 bedeutet ein Farbstufenwert FS0, daß an der jeweiligen Druckposition kein Farbauftrag erfolgt (der Aufzeichnungsträger bleibt dort unbedruckt). Mit zunehmenden Farbstufenwerten FS1 bis FS5 werden Farbpunkte FP1 bis FP5 mit zunehmender Größe erzeugt. Aus Platzgründen ist in den in der Figur 6 dargestellten Referenzmustern nur jeweils die arabische Ziffer des Farbstufenwertes eingetragen. Die Ziffer "5" symbolisiert z. B. den Farbstufenwert FS5. Ausgehend von dem Referenzmuster R gemäß Figur 4 mit dreizehn Positionen und unter der Voraussetzung, daß in jedem Referenzmuster maximal zwei unterschiedliche Farbstufenwerte enthalten sind, ergeben sich insgesamt 66 verschiedene, jeweils einem Halbtonschritt HS0 bis HS65 zugeordnete Referenzmuster R0 bis R65. Der Halbtonschritt HS0 repräsentiert dabei einen unbedruckten Bereich bzw. einen Bereich mit maximaler Helligkeit in dem Vorlagenbild. Die Referenzmuster R1 bis R13 unterscheiden sich dadurch, daß gemäß den aufzählenden Positionsnummern (Figur 4) 01 bis 13 mit jeder an Intensität zunehmenden Halbtonstufe HS0 bis HS13 jeweils ein weiterer Farbpunkt FP1 gesetzt ist. Bei den Halbtonstufen HS14 bis HS26 wird gemäß den Positionsnummern 01 bis 13 jeweils ein Farbstufenwert von FS1 auf FS2 erhöht. In analoger Weise sind die übrigen Halbtonstufen HS27 bis HS65 gebildet.

Neben der verschiedenen Größe der Farbpunkte FP1 bis FP5 können die verschiedenen Farbstufenwerte FS1 bis FS5 auch durch zunehmende optische Dichten der Farbpunkte FP1 bis FP5 umgesetzt werden. Bei Verwendung eines Thermodruckkopfes (vgl. Figur 1) werden die unterschiedlichen Größen der Farbpunkte FP1 bis FP5 durch entsprechend gesteuerte Energiezufuhren zu den einzelnen Heizelementen des Thermodruckkopfes realisiert.

In der Figur 7 werden nun ausgehend von den zuvor beschriebenen Verarbeitungsrahmen bzw. Referenzmustern mit den Positionsnummern 1 bis 13 die Verfahrensschritte in der Zuordnungseinrichtung ZE (Figur 1) beschrieben. Das symbolhaft dargestellte Vorlagenbild VB besteht aus einer Vielzahl von Rasterpunkten RP, wobei ein Ausschnitt AS des Vorlagenbildes VB vergrößert (AS1) dargestellt ist. Die Halbtonstufe jedes Rasterpunktes RP wird von einem Bilddatum BU dargestellt. Auch hier ist aus Platzgründen jeweils nur die arabische Ziffer der jeweiligen Halbtonstufe dargestellt; so bedeutet beispielsweise "18" die Halbtonstufe HS18. In dem Ausschnitt AS1 erkennt man die Zusammenfassung von jeweils dreizehn Bilddaten in einem Verarbeitungsrahmen V15 (vgl. Figur 3). Die Verarbeitungsrahmen grenzen nahtlos aneinander, so daß quasi die gesamte Vorlagenbildfläche von Verarbeitungsrahmen bedeckt bzw. sämtliche Bilddaten im Verarbeitungsrahmen übernommen sind. Die in der Zuordnungseinrichtung ZE vorgenommene Zuordnung (Figur 1) wird im folgenden anhand von drei beispielhaft ausgewählten und mit "0" markierten Bilddaten in dem Verarbeitungsrahmen V15 erläutert. Das oberste, auf der Positionsnummer 07 des Verarbeitungsrahmens V15 angeordnete Bilddatum BU repräsentiert eine Halbtonstufe HS20. In dem der Halbtonstufe HS20 zugeordneten Referenzmuster R20 ist an der Positionsnummer 07 der Farbstufenwert 2 (FS2) eingetragen. Diesem Bilddatum wird daher der Farbstufenwert FS 2 zugeordnet und in den Druckdatenspeicher DS in entsprechender Position eingeschrieben, wie es andeutungsweise in einem Druckdatenspeicherausschnitt AS2 dargestellt ist. Je ein die Halbtonstufe HS18 repräsentierendes Bilddatum BU ist auf den Positionsnummern 08 und 12 des Verarbeitungsrahmens V15 angeordnet; gemäß dem der Halbtonstufe HS18 zugeordneten Referenzmuster R18 erhalten diese Positionen in dem Druckdatenspeicher DS jeweils den Farbstufenwert 1 (FS1). Auf diese Weise wird mit allen Druckdaten verfahren, so daß der Druckdatenspeicherausschnitt AS2 schließlich die in Figur 7 gezeigte Belegung mit Farbstufenwerten aufweist. Mit den diese Weise gewonnenen Farbstufenwerten wird der Druckkopf DK beaufschlagt.

Figur 8 zeigt ein auf diese Weise gewonnenes Druckergebnis, wobei auch hier nur ein Ausschnitt AS3 des Wiedergabebildes WB dargestellt ist. Man erkennt im wesentlichen Farbpunkte FP1 und FP2 die an Druckpositionen DP ausgegeben sind. Eine Druckposition DP0 ist ohne Farbauftrag geblieben, weil die entsprechende Speicherstelle des Speichers (AS2 in Figur 7) den Farbstufenwert FS0 enthielt. Der Betrachter erhält von dem Ausschnitt AS3 ein verhältnismäßig gleichmäßiges Bild, das weder durch horizontal noch durch vertikal verlaufende Farbpunktkonzentrationen gemustert ist (Texturen) und keine wesentlichen Kontrastsprünge enthält. Dieser Eindruck entspricht den Bilddaten gemäß Ausschnitt AS1 (Figur 7), die einen verhältnismäßig engen Bereich von Halbtonstufen repräsentieren. Durch die Verwendung von rautenförmig strukturierten Referenzmustern ergibt sich in dem Wiedergabebild entsprechend dem stufenweisen Versatz aneinander angrenzender Rauten eine weitere zufällige Verteilung der jeweiligen Farbpunkte FP1 und FP2, durch die die Gleichmäßigkeit einer Wiedergabe eines mit einer einheitlichen Halbtonstufe versehenen Bereichs weiter erhöht wird.

Figur 9 zeigt die Verhältnisse bei einem innerhalb des Vorlagenbildes VB auftretenden Kontrastsprung. Dieser Kontrastsprung hat bei einem analog dargestellten Vorlagenbild den Verlauf der dünnen Linie KS. Bei einem digitalisierten Vorlagenbild VB in der vorliegenden Form verläuft der Kontrastsprung entlang der Linie KSD. Links der Linie KSD ist ein Bereich mit verhältnismäßig intensivem Grau-Wert (Halbtonstufe 48) und rechts der Linie KSD ein Bereich mit verhältnismäßig niedriger Intensität (Halbtonstufe 17) gezeigt. Wie im Zusammenhang mit der Figur 7 beschrieben, wird jedes einzelne Bilddatum BU ausgewertet und jedem Bilddatum ein Farbstufenwert zugeordnet, so daß der Kontrastsprung entlang der Linie KDS zu einer Anordnung von Farbstufenwerten gemäß Referenzmuster R17 für die Halbtonstufe HS17 rechts der Linie KSD und zu einer Anordnung von Farbstufenwerten gemäß Referenzmuster R48 für die Halbtonstufe 48 links der Linie KSD führt. Im Bereich der Linie KSD erkennt man eine bruchstückartige Zusammensetzung von Bildbereichen aus dem Referenzmuster R17 und dem Referenzmuster R48. In diesem Bereich sind Farbstufenwertesprünge von 1 bis 4 verhältnismäßig häufig anzutreffen, so daß beim Wiedergabebild WB für das menschliche Auge eine deutliche Kontrastlinie erkennbar ist. Gleichzeitig zeigt Figur 9, daß im Bereich homogener Farbstufungen - z. B. links der Linie KSD bei der Halbtonstufe 48 - die Anordnung der Farbstufenwerte identisch mit der Anordnung der Farbstufenwerte in dem Referenzmuster R48 ist bzw. eine entsprechende Ausgabe von Farbpunkten FP3 und FP4 bewirkt. Analoges gilt für den Bereich rechts der Linie KSD.

Die Bereiche homogener Halbtonstufen sind also in homogener Anordnung von Farbpunkten wiedergegeben, die sich maximal um ein Farbstufenwert unterscheiden. Da die Anordnung der Farbstufenwerte in den Referenzmustern keine Konzentrationen von Farbstufenwerten höherer bzw. niedrigeren Wertes in der horizontalen oder vertikalen Bildrichtung aufweist, ergibt sich für den Betrachter ein gleichmäßiger Graueindruck ohne störende Texturen in dem Wiedergabebild WB.

## Patentansprüche

1. Verfahren zum Drucken eines Halbtonbildes gemäß Bilddaten (BD), wobei jedes Bilddatum (BU) die Halbtonstufe (HS0...HS65) eines Rasterpunktes eines Vorlagenbildes (VB) beschreibt,
- bei dem Verarbeitungsrahmen (V15) verwendet werden, wobei jeder Verarbeitungsrahmen (V15) Positionen für die Bilddaten von jeweils mehreren benachbarten Rasterpunkten (RP) aufweist,
- bei dem die Bilddaten (BD) in die Verarbeitungsrahmen (V15) in der Anordnung der von ihnen beschriebenen Rasterpunkte (RP) übernommen werden,
- bei dem aus den in den Verarbeitungsrahmen (V15) enthaltenen Bilddaten Farbstufenwerte (FS0...FS5) gewonnen werden, die Druckpositionen (DP) eines Druckrasters (DR) zugeordnet werden,
- und bei dem zum Erzeugen der Halbtonstufen (HS0...HS65) wahlweise Farbpunkte (FP0...FP5) mit abgestuften Farbstufungen an den Druckpositionen (DR) gedruckt werden, wobei die Farbstufung jedes Farbpunktes (FP0...FP5) gemäß dem der jeweiligen Druckposition (DP) zugeordneten Farbstufenwert (FS0...FS5) eingestellt wird,
**dadurch gekennzeichnet**, daß
- den Positionen der Verarbeitungsrahmen (V15) Positionsnummern (01...13) zugeordnet werden,
- daß jeder Halbtonstufe (HS0...HS65) jeweils ein Referenzmuster (R0...R65) zugeordnet ist, wobei das jeweilige Referenzmuster (R0...R65) vorgegebene Farbstufenwerte (FS0...FS5) in Positionen enthält, die hinsichtlich ihrer Anordnung den Positionen in den Verarbeitungsrahmen (V15) entsprechen,
- und daß aus jedem Bilddatum (BU) ein Farbstufenwert (FS0...FS5) für eine Druckposition (DP) gewonnen wird, indem gemäß der von dem Bilddatum (BU) beschriebenen Halbtonstufe (HS0...HS5) und der Positionsnummer (01...13) seiner Position in dem Verarbeitungsrahmen (V15) das der betreffenden Halbtonstufe (HS0... HS65) zugeordnete Referenzmuster (R0...R65) ausgewählt und der an entsprechender Positionsnummer (01...13) im ausgewählten Referenzmuster vorhandene Farbstufenwert (FS0...FS5) der dem jeweiligen Bilddatum (BU) entsprechenden Druckposition (DP) zugeordnet wird.

2. Verfahren nach Anspruch 1,
**dadurch gekennzeichnet**,
daß in jedem Referenzmuster (R0...R65) höchstens zwei verschiedene Farbstufenwerte (FS0, FS1) enthalten sind.

3. Verfahren nach Anspruch 1 oder 2,
**dadurch gekennzeichnet**,
daß Referenzmuster (R0...R65) verwendet werden, die sich von Halbtonstufe (HS5) zu Halbtonstufe (HS6) in der Belegung der Positionen darin unterscheiden, daß jeweils eine Position mit einem im Vergleich zum Referenzmuster (R5) der nächstniedrigen Halbtonstufe (HS5) um eine Stufe erhöhten Farbstufenwert (FS1) belegt ist, wobei die Reihenfolge der Belegung mit einem um jeweils eine Stufe erhöhten Farbstufenwert (FS1) bei zunehmender Intensität der Halbtonstufen (HS0...HS65) durch die Folge der Positionsnummern (01...13) bestimmt wird.

4. Verfahren nach einem der Ansprüche 1 bis 3,
**dadurch gekennzeichnet**,
daß die Positionsnummern (01...13) in einem Verarbeitungsrahmen (V1) so festgelegt werden, daß beim Setzen einer Positionsnummer die Summe der Abstände zu den bereits gesetzten Positionsnummern (01...13) maximal ist, wobei auch die gesetzten Positionen unmittelbar benachbarter Verarbeitungsrahmen (V2...V5) betrachtet werden.

5. Verfahren nach einem der Ansprüche 1 bis 4,
**dadurch gekennzeichnet**,
daß Verarbeitungsrahmen (V15) und Referenzmuster (R) mit jeweils symmetrisch rautenförmiger Struktur verwendet werden.

6. Verfahren nach Anspruch 5,
**dadurch gekennzeichnet**,
daß Verarbeitungsrahmen (V15) und Referenzmuster (R) mit jeweils dreizehn Positionen verwendet werden.

## Claims

1. A process for printing a continuous-tone image in accordance with image data (BD), where each image data unit (BU) describes the continuous-tone step (HS0 ... HS65) of a dot of an original image (VB),
- in which processing frames (V15) are used, each processing frame (V15) having positions for the image data of several adjacent dots (RP) in each case,
- in which said image data are transferred into the processing frames (V15) in the arrangement of dots (RP) described by them,
- in which color step values (FS0 ... FS5) are obtained from said image data contained in said processing frames (V15) and are assigned to the print positions (DP) of a print screen (DR),
- and in which color dots (FP0 ... FP5) with graduated color steps are optionally printed at said print positions (DP) for generation of said continuous-tone steps (HS0 ... HS65), said color graduation of each color dot (FP0 ... FP5) being set in accordance with the color step value (FS0 ... FS5) assigned to the respective print position (DP), characterized in that
- position numbers (01 ... 13) are assigned to the positions of said processing frames (V15),
- each continuous-tone step (HS0 ... HS65) is assigned a reference pattern (R0 ... R65), said reference pattern (R0 ... R65) containing preset color step values (FS0 ... FS5) in positions that with regard to their arrangement match the positions in said processing frames (V15),
- and from each image data unit (BU) a color step value (FS0 ... FS5) is obtained for a print position (DP) in that the reference pattern (R0 ... R65) assigned to the appropriate continuous-tone step (HS0 ... HS65) is selected in accordance with the continuous-tone step (HS0 ... HS5) described by said image data unit (BU) and with the position number (01 ... 03) of its position in said processing frame (V15), and the color step value (FS0 ... FS5) present at the appropriate position number (01 ... 13) in the selected reference pattern is assigned to the print position (DP) corresponding to the respective image data unit (BU).

2. The process according to Claim 1, characterized in that each reference pattern (R0 ... R65) contains a maximum of two different color step values (FS0, FS1).

3. The process according to Claim 1 or 2, characterized in that reference patterns (R0 ... R65) are used that differ from continuous-tone step (HS5) to continuous-tone step (HS6) in the occupation of the positions in that in each case a position is occupied with a color step value (FS1) that is one step higher in comparison with the reference pattern (R5) of the next-down continuous-tone step (HS5), where the sequence of occupation with a color step value (FS1) that is one step up in each case as the continuous-tone steps (HS0 ... HS65) increase in intensity is determined by the sequence of the position numbers (01 ... 13).

4. The process according to one of Claims 1 to 3, characterized in that the position numbers (01 ... 13) are fixed in a processing frame (V1) such that when a position number is set, the sum of spacings from the already set position numbers (01 ... 13) is at a maximum, where the set positions of immediately adjacent processing frames (V2 ... V5) are also considered.

5. The process according to one of Claims 1 to 4, characterized in that processing frames (V15) and reference patterns (R) with symmetrical lozenge structure are used.

6. The process according to Claim 5, characterized in that processing frames (V15) and reference patterns (R) each having thirteen positions are used.

## Revendications

1. Procédé pour l'impression d'une image en demi-teinte selon des données d'image (BD), chaque donnée d'image (BU) définissant le niveau de demi-teinte (HS0 ... HS65) d'un point de trame d'une image modèle (VB),
- selon lequel on utilise des cadres de traitement (V15), chaque cadre de traitement (V15) présentant des positions pour les données d'image de plusieurs points de trame (RP) voisins,
- selon lequel les données d'image (BD) sont reprises dans les cadres de traitement (V15) et ce, dans la disposition des points de trame (RP) décrits par elle ;
- selon lequel on définit, à partir des données d'image contenues dans les cadres de traitement (V15) des valeurs de teinte (FS0 ... FS5) attribuées aux positions d'impression (DP) d'une trame d'impression (DR) ; et
- selon lequel on imprime, pour produire des niveaux de demi-teinte (HS0 ... HS65), des points de couleur (FP0 ... FP5) avec des teintes graduées au niveau des positions d'impression (DR), la teinte de chaque point de couleur (FP0 ... FP5) étant définie en fonction de la valeur de teinte (FS0 ... FS5) attribuée à la position d'impression (DP) correspondante,
**caractérisée en ce que :**
- des numéros de position (01 ... 13) sont attribués aux positions des cadres de traitement (V15) ;
- une structure de référence (R0 ... R65) est attribuée à chaque niveau de demi-teinte (HS0 ... HS65), la structure de référence (R0 ... R65) en question comprenant des valeurs de teinte (FS0 ... FS5) préalablement définies dont la disposition correspond aux positions dans les cadres de traitement (V15) ; et
- en ce qu'une valeur de teinte (FS0 ... FS5) est définie, à partir de chaque donnée d'image (BU) pour une position d'impression (DP) en sélectionnant, selon le niveau de demi-teinte (HS0 ... HS5) décrit par la donnée d'image (BU) et le numéro de position (01 ... 13) de sa position dans le cadre de traitement (V15), la structure de référence (R0 ... R65) attribuée au niveau de demi-teinte correspondant (HS0 ... HS65) et en attribuant la valeur de teinte (FS0 ... FS5) du numéro de position (01 ... 13) de la structure de référence sélectionnée à la position d'impression (DP) correspondant à la donnée d'image (BU) en question.

2. Procédé selon la revendication 1, caractérisé en ce que chaque structure de référence (R0 ... R65) comprend au maximum deux valeurs de teinte différentes (FS0, FS1).

3. Procédé selon l'une quelconque des revendications 1 ou 2, caractérisé en ce que l'on utilise des structures de référence (R0 ... R65) dont l'occupation des positions se distingue, d'un niveau de demi-teinte (HS5) à l'autre (HS6) par le fait qu'une position d'un niveau de demi-teinte inférieur (HS5) par rapport à la structure de référence (R5) est occupée par une valeur de teinte (FS1) d'un niveau plus haut, l'ordre de l'occupation étant défini par la séquence des numéros de position (01 ... 13) avec une valeur de teinte (FS1) supérieure d'un niveau pour une augmentation de l'intensité des niveaux de demi-teinte (HS0 ... HS65).

4. Procédé selon l'une quelconque des revendications 1 à 3, caractérisé en ce que les numéros de position (01 ... 13) d'un cadre de traitement (V1) sont définis de sorte que, lors de l'attribution d'un numéro de position, la somme des écartements par rapport aux numéros de position préalablement affectés (01 ... 13) soit maximale tout en tenant compte des positions attribuées dans les cadres de traitement immédiatement adjacents (V2 ... V5).

5. Procédé selon l'une quelconque des revendications 1 à 4, caractérisé en ce que l'on utilise des cadres de traitement (V15) et des structures de référence (R) de forme rhomboïde symétrique.

6. Procédé selon la revendication 5, caractérisé en ce qu'on utilise des cadres de traitement (V15) et des structures de référence (R) comprenant treize positions chacun.
